# EUROPEAN PATENT APPLICATION

(11) **EP 1 600 270 A1**
(43) Date of publication of application: **30.11.2005**
(21) Application number: 04705923.3
(22) Date of filing: 28.01.2004
(51) Int. Cl.: B28D 5/00, C03B 33/023

(54) **SUBSTRATE DIVIDING APPARATUS AND METHOD FOR DIVIDING SUBSTRATE**

(30) Priority: 29.01.2003 JP 2003021109
(71) Applicant: Mitsuboshi Diamond Industrial Co., Ltd., Suita-city, Osaka Pref. 564-0044 (JP)
(72) Inventor: NISHIO, Yoshitaka c/o Mitsuboshi Diamond, Suita-city, Osaka 564-0044 (JP)
(74) Representative: Leson, Thomas Johannes Alois
(86) International application number: PCT/JP2004/000780
(87) International publication number: WO 2004/067243

(57) **Abstract**

A substrate cutting apparatus for cutting a substrate includes a scribe line forming means for forming a scribe line on a substrate and a breaking means for breaking the substrate along the scribe line. The breaking means includes means for spraying a heated fluid having a temperature sufficient to cause expansion of the substrate onto the scribe line formed on the substrate so as to further extend a vertical crack extending from the scribe line in the thickness direction of the substrate.

## Description

### TECHNICAL FIELD

The present invention relates to a substrate cutting apparatus and substrate cutting method for cutting a substrate by forming a scribe line on a substrate and breaking the substrate along the scribe line

### BACKGROUND ART

A liquid crystal display device includes a display panel with liquid crystal inserted between a pair of glass substrates bonded to each other. A glass substrate included in such a display panel is manufactured by cutting a mother glass substrate into glass substrates with a predetermined size, and then bonding the glass substrates.

Such a display panel is also manufactured by bonding large-scale mother glass substrates to each other so as to form a bonded mother glass substrate, and then cutting each mother glass substrate of the bonded mother glass substrate into glass substrates with a predetermined size.

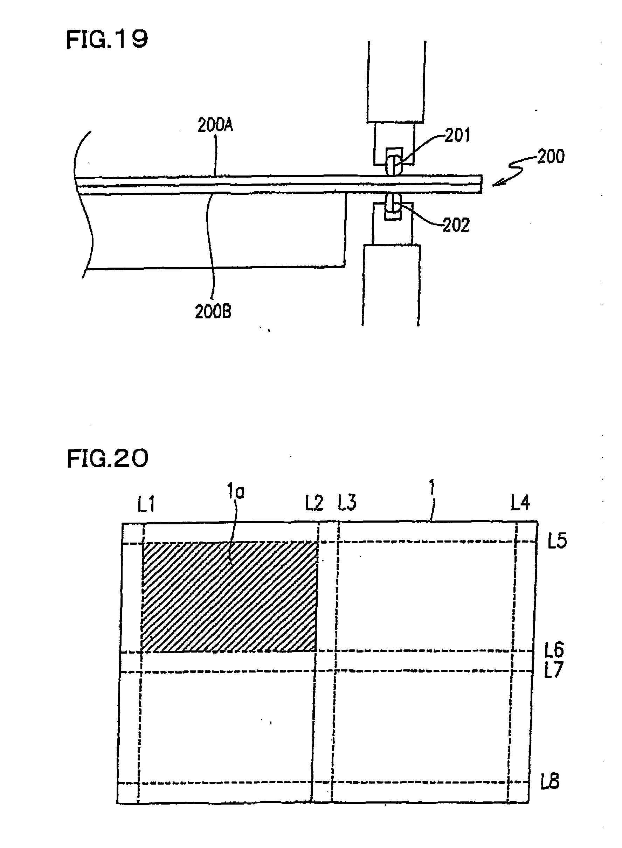

Figure 20 shows a plurality of lines to be scribed, formed on a conventional mother glass substrate used in a scribing step.

A mother glass substrate 1 has a rectangular shape. For example, in a scribing step, scribe lines are formed in a specific order along lines L1-L4 to be scribed along a vertical direction (i.e. , a direction along a shorter side), and then, scribe lines are formed in a specific order along lines L5-L8 to be scribed along a horizontal (lateral) direction (i.e., a direction along a longer side). Then, in a breaking step, the mother glass substrate is broken by applying a bending stress to the mother glass substrate 1 along the scribe lines.

By forming the breaking step after performing the scribing step, the mother glass substrate 1 is cut into four substrates 1a.

The scribing step for the mother glass substrate 1 is, for example, a step of scribing the mother glass substrate 1 by a scribing device including a rotating table which is rotated in a horizontal direction with the mother glass substrate 1 mounted and a scribing means which moves reciprocally along a predetermined horizontal direction.

The breaking step for the mother glass substrate 1 is performed by applying a bending moment along the scribe line formed on the mother glass substrate 1.

The details of the scribing step and the breaking step will be described below.

The mother glass substrate 1 is fixed on a rotating table which is rotatable in a horizontal direction. For example, a cutter wheel tip forms four scribe lines in a specific order along lines L1-L4 to be scribed in a Vertical direction. Thereafter, the rotating table on which the mother glass substrate 1 is mounted is rotated in a horizontal direction with an angle of 90 degrees. Four scribe lines are formed in a specific order along lines L5-L8 to be scribed in a lateral direction. Alternatively it is possible that the scribe lines are formed respectively along the lines L5-L8 to be scribed in a lateral direction, and then the rotating table on which the mother glass substrate is mounted 1 is rotated with an angle of 90 degrees, and then scribe lines are formed respectively along lines L1-L4 to be scribed in a vertical direction. In this way, the scribing step is performed.

In general, a scribe line is formed by rotating a cutter wheel tip with the cutter wheel tip pressed onto a surface of a mother glass substrate 1. A vertical crack extends from a scribe line along the thickness direction of the mother glass substrate 1.

After the scribe lines are formed on the mother glass substrate 1, the mother glass substrate 1 is bent to deform the mother glass substrate 1 to apply a bending moment along the scribe line formed on the mother glass substrate 1. The mother glass substrate 1 is broken along the scribe line by extending the vertical crack from the scribe line in the scribing step, so that the vertical crack reaches to a surface of a side opposite to the side on which the scribe line of the mother glass substrate 1 is formed. In this way, the breaking step is preformed.

By performing the breaking step after performing the scribing step, the mother glass substrate 1 is out into four substrates 1a.

Japanese Patent No. 2785906 (patent document 1) discloses that as a method of retrieving a glass substrate in a shape of a circle for a magnetic disc and an optical disc out of a glass plate, the glass plate is heated (breaking step) after a out line (scribe line) angled with respect to the thickness of the glass plate is formed to be a closed curved line (scribe step).

In a scribing method where scribe lines which cross each other are formed on a mother glass substrate (cross-scribing method) as shown in Figure 20, usually the mother glass substrate 1 is fixed on a predetermined table. A scribe line forming means such as a scribing cutter is moved linearly with respect to the mother glass substrate 1 that to fixed on the table. Thus, after scribe lines are formed along the vertical direction or the lateral direction of the mother glass substrate 1, the table on which the mother glass substrate is mounted is rotated with an angle of 90 degrees. Then scribe lines are formed along a direction orthogonal to the direction in which the scribe lines are previously formed.

The applicant developed a cutter wheel tip with a high capability of forming a vertical crack along the thickness direction for a brittle material substrate such as the mother glass substrate disclosed in Japanese Patent No. 3074143. However, when the cross-scribing is performed by such a cutter wheel tip, there is a possibility that a chipping may occur at a crossing point in the mother glass substrate 1 which is formed by scribing in a first direction and scribing a second direction.

A vertical crack is already formed, which reaches a depth approximately equivalent to the thickness of the plate in the mother glass substrate 1 when a scribing is performed in the first direction. Thus, when the cutter wheel tip reaches near the scribe line in the first direction while the scribing is performed in the second direction, the mother glass substrate 1 sinks. Therefore, such a chipping occurs when cutter wheel tip moves onto the glass substrate along the scribe line in the first direction at the crossing point of the scribe lines in the first direction and the second direction.

In a method for cutting the mother glass substrate 1 placing it on a table of a breaking apparatus for performing the breaking step while the front and back surfaces of the mother glass substrate 1 are reversed by extending a vertical crack by applying a bending moment along the scribe line formed, chippings can easily occur due to competing motion of the substrates.

Furthermore, as disclosed in the patent document 1, in a method where a out line (scribe line) angled in the thickness direction with respect to a glass plate is formed, and then the glass substrate having a circular shape is retrieved from the glass plate, a special scribe line forming means such as a special scribing cutter is required to form a out line (scribe line) angled with respect to the thickness direction of the glass substrate. Since the cutting face of the glass plate having a circular shape as a product cut from the glass plate is angled, a grinding step is required so that the cutting face becomes an end surface vertical to the surface of the glass substrate having a circular shape.

The present invention is made in view of the problems mentioned above. The objective of the present invention is to provide a substrate cutting apparatus and a substrate cutting method capable of easily breaking a substrate along a scribe line so that chippings do not occur in the substrate due to competing motion of the substrates, and cutting the substrate so that the end surface of the substrate becomes vertical to the surface of the substrate.

### DISCLOSURE OF THE INVENTION

A substrate cutting apparatus of the present invention includes a scribe line forming means for forming a scribe line on a substrate, and a breaking means for breaking the substrate along the scribe line, wherein the breaking means includes means for spraying a heated fluid having a temperature sufficient to cause expansion of the substrate onto the scribe line formed on the substrate so as to further extend a vertical crack extending from the scribe line in the thickness direction of the substrate.

The scribe line includes at least a first line portion and a second line portion, the first line portion and the second line portion crossing each other and each being a straight line, a curved line or a combination thereof, and the scribe line forming means forms the first line portion and the second line portion while the scribe line forming means is spaced from the substrate.

The scribe line includes a first line portion and a second line portion, the first line portion and the second line portion crossing each other and each being a straight line, a curved line or a combination thereof, and the scribe line forming means forms the first line portion and the second line portion without the scribe line forming means being spaced away from the substrate.

The scribe line further includes a curved line portion smoothly connected to an end of the first line portion and an end of the second line portions, the end of the first line portion is connected to the end of the second line portion, the curved line portion is formed along a boundary line defining a predetermined region on the substrate, at least a portion of the boundary line is a curved line and the at least a portion of the boundary line is smoothly connected to another portion of the boundary line, and the scribe line forming means forms the first line portion, the curved line portion and the second line portion.

The scribe line further includes a third line portion, a first curved line portion and a second curved line portion, the first line portion, the second line portion and the third line portion crossing one another, and each being a straight line, a curved line or a combination thereof, the first line portion, the second line portion and the third line portion define at least a portion of a third region having a polygonal shape on the substrate, an end of the first line portion is connected to an end of the second line portion, another end of the second line portion is connected to an end of the third line portion, the first curved line portion is a curved line portion which is smoothly connected to the end of the first line portion and the end of the second line portion, the first curved line portion is formed along a first boundary line defining a first region on the substrate, at least a portion of the first boundary line is a curved line and the at least portion of the first boundary line is smoothly connected to another portion of the first boundary line, the second curved line portion is a curved line portion which is smoothly connected to the other end of the second line portion and the end of the third line portion, the second curved line portion is formed along a second boundary line defining a second region on the substrate, at least portion of the second boundary line is a curved line and the at least a portion of the second boundary line is smoothly connected to another portion of the second boundary line, the first region, the second region and the third region are different regions which do not overlap one another, and the scribe line forming means forms the first line portion, the first curved line portion, the second line portion, the second curved line portion and the third line portion.

The scribe line further includes a third line portion, a fourth line portion, a first curved line portion, a second curved line portion and a third curved line portion, the first curve portion, the second line portion, the third line portion and the fourth line portion crossing one another and each being a straight line, a curved line or a combination thereof, the first line portion, the second line portion, the third line portion and the fourth line portion define a fifth region having a rectangular shape on the substrate, an end of the first line portion is connected to an end of the second line portion, another end of the second line portion is connected to an end of the third line portion, another end of the third line portion is connected to an end of the fourth line portion, another end of the fourth line portion is connected to another end of the first line portion, the first curved line portion is a curved line portion which is smoothly connected to the end of the first line portion and the end of the second line portion, the first curved line portion is formed along a first boundary line defining a first region on the substrate, at least a portion of the first boundary line is a curved line and the at least a portion of the first boundary line is smoothly connected to another portion of the first boundary line, the second curved line portion is a curved line portion which is smoothly connected to the other end of the second line portion and the end of the third line portion, the second curved line portion is formed along a second boundary line defining a second region on the substrate, at least portion of the second boundary line is a curved line and the at least a portion of the second boundary line is smoothly connected to another portion of the second boundary line, the third curved line portion is a curved line portion which is smoothly connected to the other end of the third line portion and the end of the fourth line portion, the third curved line portion is formed along a third boundary line defining a third region on the substrate, at least a portion of the third boundary line is a curved line, and the at least a portion of the third boundary line is smoothly connected to another portion of the third boundary line, the first region, the second region, the third region and the fifth region are different regions on the substrate which do not cross overlap one another, the scribe line forming means forms the first line portion, the first curved line portion, the second line portion, the second curved line portion, the third line portion, the third curved line portion and the fourth line portion.

The scribe line forming means is a scribe cutter having a shape of a disc, and a blade edge which rolls and contacts a surface of the substrate is formed on an external circumference surface of the scribing cutter.

A plurality of protrusions with a predetermined pitch is formed on the blade edge.

The substrate cutting apparatus further includes a heating means for heating the scribe line.

A pressure applied to the substrate by the scribe line forming means when forming the curved portion is lower than a pressure applied to the substrate by the scribe line forming means when forming at least one of the first line portion and the second line portion.

The substrate cutting apparatus further includes a rotating driving means for rotating the scribe line forming means around a vertical axis.

A substrate cutting method includes a scribe line forming step of forming a scribe line on a substrate, and a breaking step of breaking the substrate along the scribe line, wherein the breaking step includes a step of spraying a heated fluid having a temperature sufficient to cause expansion of the substrate onto the scribe line formed on the substrate so as to further extend a vertical crack extending from the scribe line in the thickness direction of the substrate.

The scribe line includes at least a first line portion and a second line portion, the first line portion and the second line portion crossing each other and each being a straight line, a curved line or a combination thereof, the scribing line forming step is performed by means for forming the scribe line on the substrate, and the scribe line forming step includes the steps of: forming the first line portion, and forming the second line portion while the means being spaced from the substrate after the first line portion is formed.

The scribe line includes a first line portion and a second line portion, the first line portion and the second line portion crossing each other and each being a straight line, a curved line or a combination thereof, the scribing line forming step is performed by means for forming the scribe line on the substrate, the scribe line forming step includes the steps of: forming the first line portion, and forming the second line portion without the means being spaced from the substrate after the first line portion is formed.

The scribe line further includes a curved line portion smoothly connected to and end of the first line portion and an end of second line portion, the end of the first line portion is connected to the end of the second line portion, the curved line portion is formed along a boundary line defining a predetermined region on the substrate, at least a portion of the boundary line is a curved line and the at least a portion of the boundary line is smoothly connected to another end of the boundary line, the scribe line forming step includes steps of: forming the first line portion, forming the curved line portion and forming the second line portion.

The scribe line further includes a third line portion , a first curved line portion and a second curved line portion, the first line portion, the second line portion and the third line portion crossing one another, and each being a straight line, a curved line or a combination thereof, the first line portion, the second line portion and the third line portion define at least a portion of a third region having a polygonal shape on the substrate, an end of the first line portion is connected to an end of the second line portion, another end of the second line portion is connected to an end of the third line portion, the first curved line portion is a curved line portion which is smoothly connected to the end of the first line portion and the end of the second line portion, the first curved line portion is formed along a first boundary line defining a first region on the substrate, at least a portion of the first boundary line is a curved line and the at least a portion of the first boundary line is smoothly connected to another end of the first boundary line, the second curved line portion is a curved line portion which is smoothly connected to another end of the second line portion and an end of the third line portion, the second curved line portion is formed along a second boundary line defining a second region on the substrate, at least a portion of the second boundary line is a curved line and the at least a portion of the second boundary line is smoothly connected to another portion of the second boundary line, the first region, the second region and the third region are different regions which do not overlap one another, the scribe line forming step includes steps of: forming the first line portion, forming the first curved line portion, forming the second line portion, forming the second curved line portion and forming the third line portion.

The scribe line further includes a third line portion, a fourth line portion, a first curved line portion, a second curved line portion and a third curved line portion, the first line portion, the second line portion, the third line portion and the fourth line portion crossing one another and each being a straight line, a curved line or a combination thereof, the first line portion, the second line portion, the third line portion and the fourth line portion define a fifth region having a rectangular shape on the substrate, an end of the first line portion is connected to an end of the second line portion, another end of the second line portion is connected to an end of the third line portion, another end of the third line portion is connected to an end of the fourth line portion, another end of the fourth line portion is connected to another end of the first line portion, the first curved line portion is a curved line portion which is smoothly connected to the end of the first line portion and the end of the second line portion, the first curved line portion is formed along a first boundary line defining a first region on the substrate, at least a portion of the first boundary line is a curved line and the at least a portion of the first boundary line is smoothly connected to another portion of the first boundary line, the second curved line portion is a curved line portion which is smoothly connected to other end of the second line portion and the end of the third line portion, the second curved line portion is formed along a second boundary line defining a second region on the substrate, at least a portion of the second boundary line is a curved line and the at least a portion of the second boundary line is smoothly connected to another portion of the second boundary line, the third curved line portion is a curved line portion which is smoothly connected to another end of the third line portion and an end of the fourth line portion, the third curved line portion is formed along a third boundary line defining a third region on the substrate, at least portion of the third boundary line is a curved line and the at least a portion of the third boundary line is smoothly connected to another portion of the third boundary line, the first region, the second region, the third region and the fifth region are different regions on the substrate which do not overlap with one another, the scribe line forming step includes steps of: forming the first line portion, forming the first curved line portion, forming the second line portion, forming the second curved line portion, forming the third line portion, forming the third curved line portion and forming the fourth line portion.

The substrate cutting method further includes a heating step of heating the scribe line.

### BREIF DESCRIPTION OF THE DRAWINGS

Figure 1 is diagram showing a structure of a substrate cutting apparatus 100 according to one embodiment of the present invention.
Figure 2A is a front view of a scribing head 20.
Figure 2B is a bottom view of a scribing head 20.
Figure 3A is a cutaway view of a cutter holder 27.
Figure 3B is a side view of a cutter holder 27.
Figure 4A is a front view of a scribing cutter 21.
Figure 4B is a side view of a scribing cutter 21.
Figure 4C is an enlarged view of a part ("A" part) of the scribing cutter 21 shown in Figure 4B.
Figure 5A is a side view of a scribing head 65.
Figure 5B is a front view of main parts of a scribing head 65.
Figure 6 is a front view of a scribing head 66 of another example of a scribing head using a servo motor.
Figure 7 is a diagram showing a vertical crack extending means included in a scribing head 20'.
Figure 8 is a diagram showing another example of the vertical crack extending means.
Figure 9 is a flowchart showing a procedure for cutting the substrate according to one embodiment of the present invention.
Figure 10 is a diagram showing an example of lines to be scribed set on a mother glass substrate used in the scribing step according to one embodiment of the present invention.
Figure 11A is a diagram showing a vertical crack that occurs when a scribe line is formed by a scribing cutter 21.
Figure 11B is a diagram showing a vertical crack and a horizontal crack that occur when a scribe line is formed by a scribing cutter 51.
Figure 12 is a diagram showing another example of lines to be scribed set on a mother glass substrate used in the scribing step according to one embodiment of the present invention.
Figure 13 is a diagram showing yet another example of lines to be scribed set on a mother glass substrate used in the scribing step according to one embodiment of the present invention.
Figure 14 is a diagram showing yet another example of lines to be scribed set on a mother glass substrate used in the scribing step according to one embodiment of the present invention.
Figure 15 is a diagram showing yet another example of lines to be scribed set on a mother glass substrate used in the scribing step according to one embodiment of the present invention.
Figure 16 is a diagram showing nine substrates 1a arranged on the mother glass substrate 1.
Figure 17 is a diagram showing yet another example of lines to be scribed formed on a mother glass substrate 1 in the scribing step according to one embodiment of the present invention.
Figure 18 is a diagram showing yet another example of lines to be scribed formed on a mother glass substrate 1 in the scribing step according to one embodiment of the present invention.
Figure 19 is a diagram showing a part of a substrate cutting apparatus capable of cutting the bonded substrate formed by bonding two substrates.
Figure 20 is a diagram showing lines to be scribed set on a conventional mother glass substrate used in the scribing step.

### BEST MODE FOR CARRYING OUT THE INVENTION

Hereinafter, embodiments of the present invention will be described in detail with reference to the drawings.

### 1. Substrate cutting apparatus

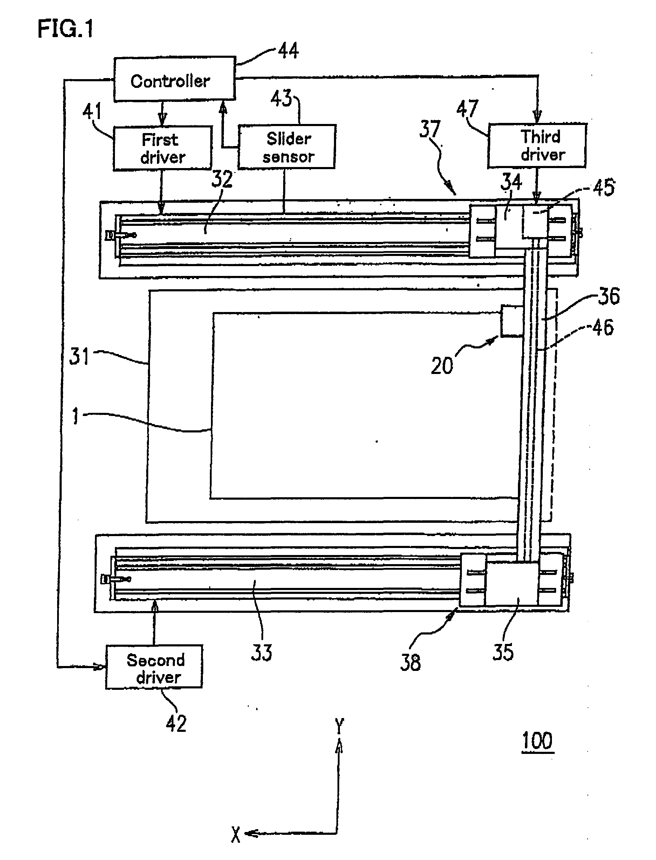

Figure 1 shows the structure of a substrate cutting apparatus 100 according to one embodiment of the present invention.

The substrate cutting apparatus 100 includes a table 31, a guide rail 32, a guide rail 33, a slider 34, a slider 35, a guide bar 36 and a linear motor 37 and a linear motor 38.

The substrate cutting apparatus 100 cuts a mother glass substrate 1 in order to manufacture a glass substrate for a liquid crystal display device.

The mother glass substrate 1 is placed on the table 31.

The guide rail 32 and the guide rail 33 are provided in parallel on both sides of the table 31.

The slider 34 is provided on the guide rail 32 so that the slider 34 is slidable along the guide rail 32.

The slider 35 is provided on the guide rail 33 so that the slider 35 is slidable along the guide rail 33.

The linear motor 37 includes a stator and a mover. The stator is arranged along the guide rail 32. The mover moves along the stator. The linear motor 37 slides the slider 34 mounted to the mover along the guide rail 32.

The linear motor 38 includes a stator and a mover. The stator is arranged along the guide rail 33. The mover moves along the stator. The linear motor 38 slides the slider 35 mounted to the mover along the guide rail 33.

The guide bar 36 is horizontally bridged between an upper end portion of the slider 34 and an upper end portion of the slider 35.

The scribing head 20 is mounted to the guide bar 36 so that the scribing head 20 is slidable along the guide bar 36. The details of the structure of the scribing head 20 will be described later.

The substrate cutting apparatus 100 further includes a control section. The control section includes a first driver 41, a second driver 42, a slider sensor 43, controller 44, a scribing head driving motor 45 and a third driver 47.

The controller 44 controls the first driver 41, the second driver 42 and the third driver 47.

The first driver 41 drives the linear motor 37 in accordance with the control by the controller 44. The second driver 42 drives the linear motor 38 in accordance with the control by the controller 44.

The slider sensor 43 is provided in a neighborhood of the guide rail 32. The slider sensor 43 detects the position of the slider 34 which slides on a guide rail 32 and outputs data indicating the detected position to the controller 44.

The third driver 47 drives the scribing head driving motor 45 in accordance with the control by the controller 44,

The scribing head driving motor 45 is provided on the slider 34. The scribing head driving motor 45 rotates a ball screw 46. The scribing head 20 moves reciprocally along the guide bar 36 in accordance with the rotation of the ball screw 46.

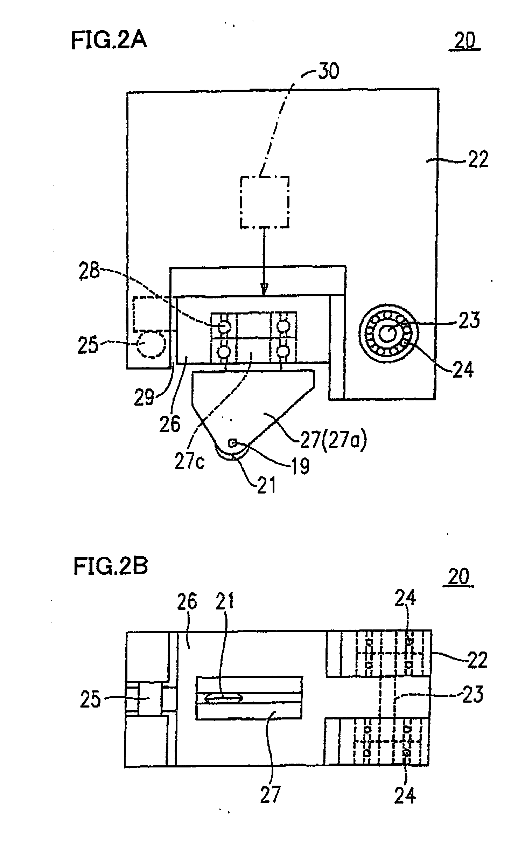

Figure 2A shows a front of the scribing head 20. Figure 2B shows a bottom of the scribing head 20.

The scribing head 20 includes a head main body section 22, a bearing case 26, a blocking axis 25, a cutter holder 27, scribing cutter 21, a energizing means 30 and a vertical crack extending means. The details of the vertical crack extending means will be described later.

The head main body section 22 includes a spindle 23, which is horizontally inserted through the head main body section 22, and a bearing 24. A recess portion 29 is formed in a lower part of the head main body portion 2a . The bearing case 26 is accommodated in the recess portion 29.

The blocking axis 25 in provided within the head main body portion in parallel with the spindle 23.

The bearing case 26 rotates around the axis of the spindle 23 within the range which is blocked by the blocking axis 25. An end portion of the bearing case 26 is connected to the spindle 23 and the other end portion of the bearing case 26 is in contact with the blocking axis 25. The bearing case 26 holds the cutter holder 27 so that the cutter holder 27 is rotatable to the bearing case 26.

The cutter holder 27 includes a cutter holder main body portion 27a and a rotary axis 27c. The cutter holder 27 is mounted to the bearing case 26 via the bearing 28 and rotates around the rotary axis 27c. The cutter holder main body portion 27a is formed integrally with the rotary axis 27c having an axis orthogonal to the surface of the mother glass substrate 1. The details of the cutter holder 27 will be described later.

The energizing means 30 is provided in the above the rotary axis 27c. The energizing means 30 is, for example, an air cylinder. As the energizing means 30 applies forces to the bearing case 26, a predetermined load is applied to the scribing cutter 21 via the rotary axis 27c and the cutter holder 27.

The scribing cutter 21 forms scribe lines on the mother glass substrate 1. The scribing cutter is, for example, a diamond point cutter or a cutter wheel tip. The scribing cutter 21 is provided to be rotatable around the rotary axis 19, and is held by the cutter holder 27.

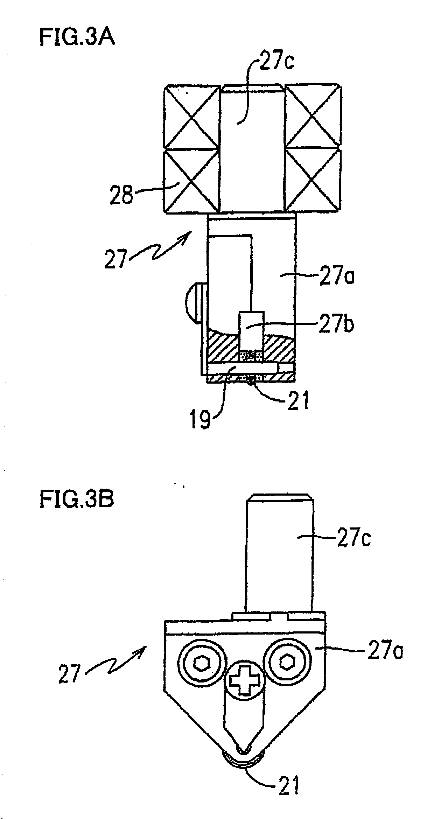

Figure 3A is a cutaway view of a cutter holder 27. Figure 3B is a side view of a cutter holder 27. In Figures 3A and 3B, the same components as those in Figures 2A and 2B are denoted by the same reference numerals.

The cutter holder 27 includes a cutter holder main body portion 27a and a rotary axis 27c. A groove portion 27b which opens downward is formed in a lower part of the cutter holder main body portion 27a. The rotary axis 27c which extends upward is formed in an upper part of the cutter holder main body portion 27a. The rotary axis 27c is held rotatably by the bearing case 26 via the bearing 28. The scribing cutter 21 (for example, a cutter wheel tip in a shape of a disc) is mounted rotatably around the rotary axis 19 within the groove portion 27b. The scribing cutter 21 is held so that the ridge of the blade edge of the scribing cutter 21 is vertical to the mother glass substrate 1.

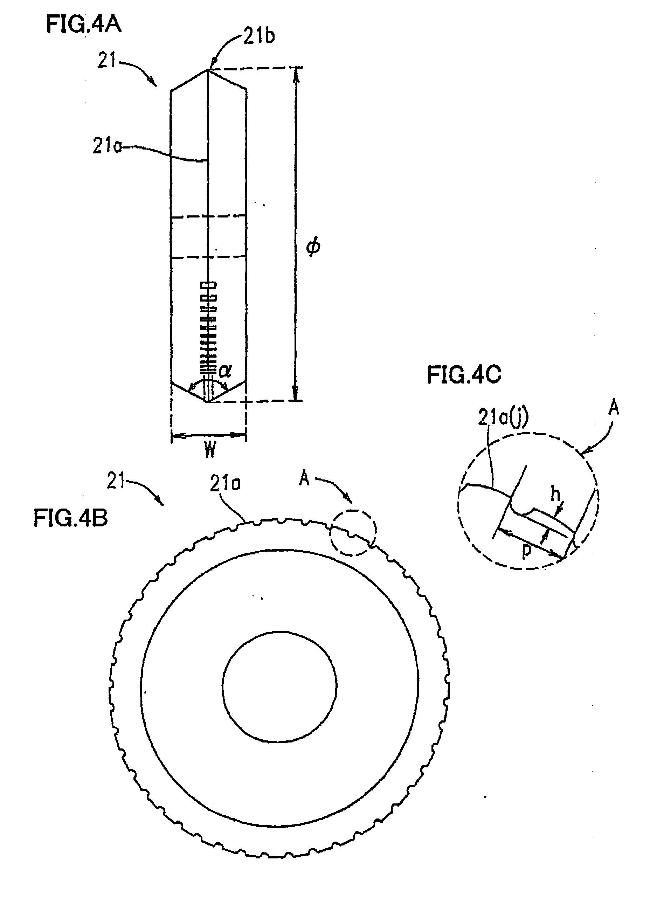

Figure 4A is a front view of the scribing cutter 21. Figure 4B is a side view of the scribing cutter 21. Figure 4C is an enlarged view of a part ("A" part) of the scribing cuter 21 shown in Figure 4B.

The scribing cutter 21 is, for example, a cutter wheel tip. The scribing head 21 shown in Figure 4A-4C is disclosed in Japanese Patent No. 3074143 by the applicant.

In an external circumference face of the wheel (diameter f, thickness W) in a shape of a disc of the scribing cutter 21, a blade edge 21b is provided on the ridge of the blade edge 21a which protrudes outward in a shape of a "V" . The blade edge 21b has an obtuse angle.

A plurality of protrusions j, which protrudes outward with a predetermined pitch, is formed on the blade edge 21b by forming grooves on the ridge portion of the blade edge. The plurality of protrusions j has a size on the order of micrometers and cannot be recognized with the naked eye.

The scribing cutter 21 has a very high capability of forming a vertical crack on a brittle material substrate (e.g., the mother glass substrate 1) along the thickness direction of the brittle material substrate. Accordingly, a vertical crack with a deep depth can be formed. Moreover, the occurrence of cracks in the horizontal direction along the surface of the brittle material substrate can be restrained.

The scribinghead 20 includedin the substrate cutting apparatus 100 has been described with reference to Figures 2A, 2B, 3A, 3B, 4A, 4B and 4C.

The structure of the scribing head included in the substrate cutting apparatus 100 is not limited to that of the scribing head 20.

Hereafter, a structure of a scribing head 65 will be described. The structure of the scribing head 65 is different from that of the scribing head 20.

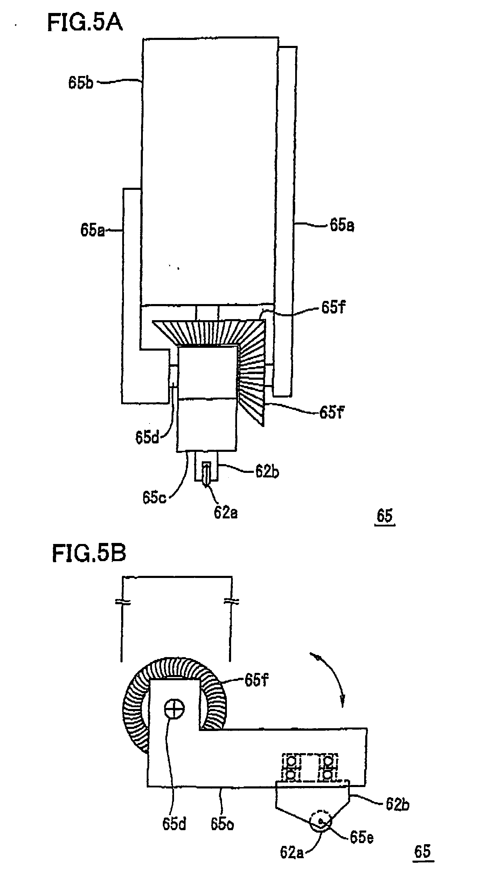

Figure 5A is a side view of the scribing head 65. Figure 5B is a front view of main parts of the scribing head 65.

The scribing head 65 includes a pair of side walls 65a, a servo motor 65b, a holder holding assembly 65c, a spindle 65d, an axis 65e, a scribing cutter 62a, a cutter holder 62b and a pair of flat bevel gears 65f.

The servo motor 65b is held in an inverted state of suspension between the pair of side walls 65a. In a lower part of the pair of side Walls 65a, the holder holding assembly 63c, which has a shape of L viewed from a side, is provided rotatably around the spindle 65d.

The cutter holder 62b supports the scribing cutter 62a rotatably around the axis 65e. The cutter holder 62b is mounted in a front part (i.e., the right-hand side in Figure 5B of the holder holding assembly 65c.

The servo motor 65b adjusts the rotation torque of the servo motor 65b immediately responsive to a change in the scribing pressure based on the fluctuation of resistance force that the scribing cutter 62a receives when the mother glass substrate 1 is scribed.

One of the pair of the flat bevel gears 65f is attached to the rotary axis of the servo motor 65b and the other of the pair of the flat bevel gears 65f is attached to the spindle 65d so that the pair of the flat bevel gears 65f engage each other. Thus, as the servo motor rotates in the forward/reverse direction, the holder holding assembly 65c moves up and down with the spindle 65d as pivot. As a result, the scribing cutter 62a moves up and down with respect to the surface of the mother glass substrate 1.

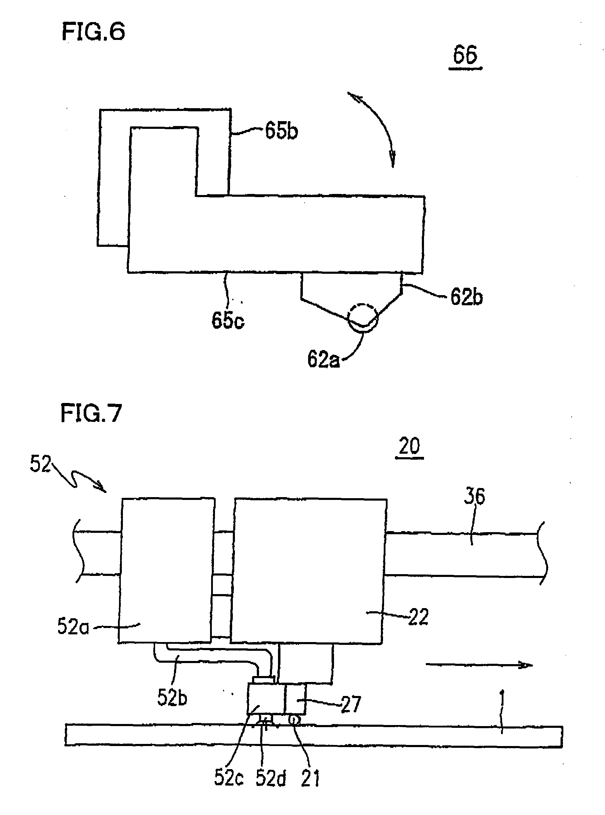

Figure 6 is a front view of a scribing head 66 which is another example of a scribing head using a servo motor.

In Figure 6, the same components as those in Figures 5A and 5B are denoted by the same reference numerals, and the description thereof will be omitted.

As shown in Figure 6, the rotary axis of the servo motor 65b of the scribing head 66 is directly connected to the holder holding assembly 65c.

Hereafter, the operations of the scribing heads 65 and 66 will be described in detail with reference to Figures 5A, 5B and 6.

As the scribing heads 65 and 66 drive the servo motor 65b in a positioning control mode, the scribing cutter. 62a is moved up and down so as to be positioned accordingly.

During a scribing step in which scribing lines are formed on the mother glass substrate 1 by the scribing heads 65 and 66, the servo motor 65b generates a rotation torque in order to return the scribing cutter 62a to the originally set position when the position of the scribing cutter 62a moves away from the position preset in the servo motor 65b. The driving control section of the servo motor 65b controls the rotation torque so that the rotation torque does not exceed a set value. The controlled rotation torque is transmitted to the cutter wheel 62a as a scribing pressure for the mother glass substrate 1. That is, the servo motor 65b applies a force, which presses the mother glass substrate 1, to the scribing cutter 62a, as well as controlling the position of the cutter wheel 62a in a perpendicular direction.

The scribing heads 65 and 66 include a servo motor 65b. Thus, the scribing heads 65 and 66 can adjust the rotation torque of the servo motor 65b immediately responsive to a change in the scribing pressure based on the fluctuation of resistance force that the scribing cutter 62a receives when the mother glass substrate 1 is scribed. As a result, a stable scribing is performed to form scribe lines with high quality.

Figure 7 shows a vertical crack extending means included in a scribing head 20'. In Figures 7, the same components as those in Figures 1 and 2A are denoted by the same reference numerals, and the description thereof will be omitted.

The scribing head 20' is provided on the guide bar 36 and also functions as a breaking mechanism for breaking the mother glass substrate 1.

A steam generating apparatus 52 is a vertical crack extending means. The steam generating apparatus 52 generates steam as means for breaking the mother glass substrate 1.

The stream generating apparatus 52 makes vertical crack extending from the scribe line in the thickness direction of the mother glass substrate 1, by spraying steam onto the scribe lines formed on the mother glass substrate 1. The sprayed steam has a temperature sufficient to expand the mother glass substrate 1.

The steam generating apparatus 52 includes amainbody portion 52a, a flexible hose 52b for passing steam through a nozzle head 52c integrally mounted to the cutter holder 27 for holding the scribing cutter 21 and a nozzle portion 52d for spraying the steam downward.

The main body portion 52a is mounted to a head main body portion 22.

One end portion of the hose 52b is provided to the main body portion 52a. The other end portion of the hose 52b is connected to the nozzle head 52c.

The nozzle head 52c is rotated integrally with the cutter holder 27 around the axis in a vertical direction. The other end portion of the hose 52b is connected to the nozzle head 52a so as to be circled. A nozzle portion 52d is provided in a lower part of the nozzle head 52c.

In the nozzle portion 52d, a steam spray opening is formed in a shape of , for example, a circle, ellipse, rectangle, or slit.

The nozzle portion 52d sprays steam onto the scribe lines formed by the scribing cutter 21 so as to heat the scribe lines.

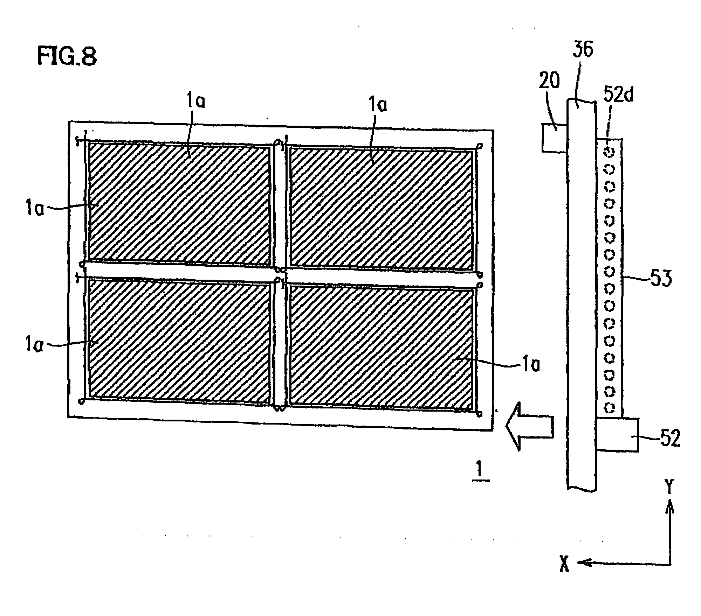

Figure 8 shows another example of the vertical crack extending means.

As shown in Figure 8, the steam generating device 52 may include a scribing head and a nozzle unit 53 separated from the scribing head, instead of the structure that the steam generating device 52 included in the scribing head 20' includes one nozzle portion 52d (see Figure 7). The nozzle unit 53 includes a plurality of nozzle portions 52d. The nozzle unit 53 is provided on the guide bar 36. With the guide bar 36 being moved in the Y direction, steam is sprayed onto the surface of the mother glass substrate 1 on which the scribe lines have been formed.

A member having a slit has been formed in the steam spraying opening in the Y direction shown in Figure 8, may be provided instead of the nozzle unit mentioned above.

According to the substrate cutting apparatus of the present invention, steam, which has a temperature sufficient to expand the substrate, is sprayed onto the scribe lines on the mother glass substrate. This extends the vertical cracks from the scribe lines in the thickness direction of the substrate.

The steam sprayed onto the vertical cracks having openings on the order of micrometers penetrates into the vertical cracks due to a capillary phenomenon. The penetrated liquid is expanded (cubical expansion). Thus, the vertical cracks are extended to a back surface of the mother glass substrate 1.

Furthermore, as cutting assisting means, the scribing head may include a laser oscillator for heating the scribing lines using a laser beam instead of steam. The scribing head 20 may include a laser oscillator for drying moisture.

Thus, vertical cracks can be extended in the thickness direction of the substrate without mechanically applying a bending moment along the scribe lines.

As a result, the substrate can be out by easily breaking the substrate along the scribe line so that chippings do not occur in the substrate due to competing motion of the substrates.

In the examples shown in Figures 1, 2A, 3B and 7, the scribing cutter 21 functions as a "scribe line forming means for forming scribe lines on a substrate". The steam generating device functions as a "breaking means for breaking the substrate along the scribe lines". The nozzle portion 52d functions as an "extending means for making a vertical crack extending from the scribe line in the thickness direction of substrate, by spraying a heated fluid onto the scribe lines formed on the substrate, the heated fluid having a temperature sufficient to cause expansion of the substrate. However, each component included in the substrate cutting apparatus of the present invention is not limited to the components shown in Figures 1, 2A, 3B and 7.

As long as each component included in the substrate cutting apparatus functions as the above-mentioned "scribe line forming means for forming a scribe line on a substrate", "breaking means for breaking the substrate along the scribe line" and "extending means for making a vertical crack extending from the scribe line in the thickness direction of substrate, by spraying a heated fluid onto the scribe line formed on the substrate, the heated fluid having a temperature sufficient to cause expansion of the substrate, each component can have an arbitrary structure.

The vertical crack extending means mentioned above is not limited to one using steam. A heated fluid can be used as long as it has a temperature sufficient to expand a substrate. The heated fluid may be, for example, steam, hot water, or a fluid including steam and hot water.

### 2. Substrate cutting method

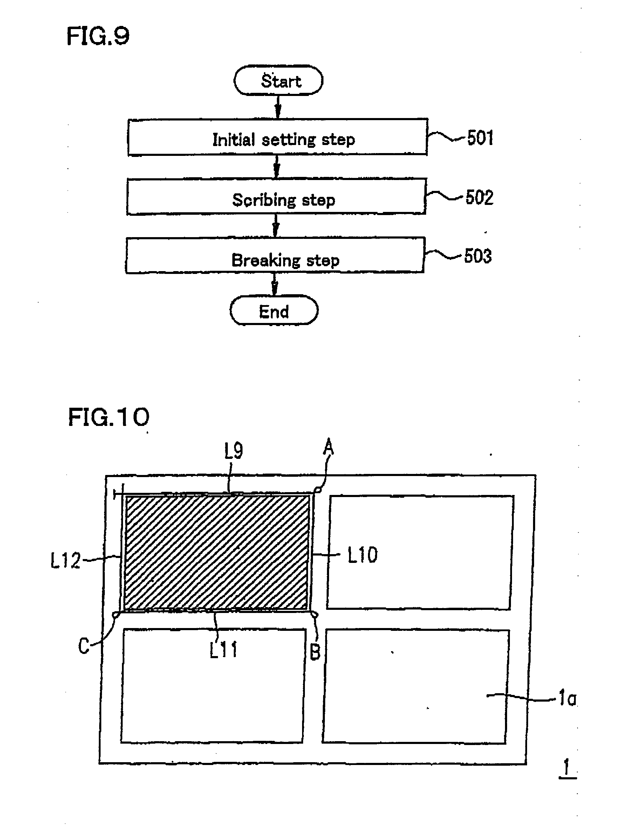

Figure 9 is a flowchart showing a procedure for cutting the substrate according to one embodiment of the present invention.

Hereinafter , a procedure for cutting the mother glass substrate 1 by the substrate cutting apparatus 100 will be described step by step.

The procedure for cutting the mother glass substrate 1 by the substrate cutting apparatus 100 includes a scribing step and a breaking step. As necessary, an initial setting step is performed.

Step 501: The initial setting step is performed. The initial setting step is a step for setting an initial state of the substrate cutting apparatus 100 before the scribing step is started. Details of the initial setting step will be described below.

After the initial setting step is finished, the process proceeds to step 502.

Step 502: The scribing step is performed. The scribing step is a step for forming a scribe line on the mother glass substrate 1. The details of the scribing step will be described below.

After the scribing step is finished, the process proceeds to step 503.

Step 503: The breaking step is performed. The breaking step is a step for breaking the mother glass substrate 1 along the scribe line. The details of the breaking step will be described below.

After the breaking step is finished, the process is terminated.

### 2-1. Initial setting step

Hereinafter, the details of the initial setting step (step 501) will be described.

As preparation work for scribing the mother glass substrate 1, the pressure of compressed air to be put into an air cylinder provided inside the head main body portion 22 is set based on various conditions for scribing the mother glass substrate 1 (e.g., the thickness, material and the like of the mother glass substrate). Based on the setting, the scribing cutter 21 presses the mother glass substrate 1 with a predetermined load. At that time, the bearing case 26, to which a force is applied by the air cylinder, rotates around the axis of the spindle 23 in an anticlockwise direction and comes into contact with the blocking axis 25.

Next, a zero point detecting step is performed. In the zero point detecting step, the position of the surface of the mother glass substrate 1 is detected. The position of the surface of the mother glass substrate 1 is necessary for moving the scribing head 20 along a direction vertical to the mother glass substrate 1.

In the zero point detecting step, the scribing head 20 is moved toward a position above the surface of the mother glass substrate 1. Next, a scribing head upward/downward means (not shown) moves the scribing head 20 downward at low speed along a vertical direction of the surface of the mother glass substrate 1. As a result, when the scribing cutter 21 is in contact with the mother glass substrate 1 and the bearing case 26 is spaced apart from the blocking axis 25, a position detection mechanism of the scribing head upward/downward means detects the position of the scribing head 20. The zero point detection data indicating the detected data is written into recording means included in the controller. In this way, the zero point detecting step is performed.

When the zero point detection is completed, the scribing head upward/downward means moves the scribing head 20 upward to a predetermined waiting position (e.g., awaiting position above the surface of the mother glass substrate 1).

In the substrate cutting apparatus 100, the mother glass substrate 1 is positioned on the table 31 and fixed to the table 31. When the mother glass substrate 1 is fixed on the table 31, a zero point detection is performed (i.e., detection of the surface position of the mother glass substrate 1) is performed after the scribing head 20 is moved to the waiting position above the surface of the mother glass substrate 1 and is further moved downward. The scribing head is moved upward to the waiting position and moved along the line to be scribed so that the scribing cutter 21 is arranged in a position in a neighborhood of the outside of end surface of the mother glass substrate 1. At the position, the blade edge of the scribing cutter 21 is moved downward to a position 0.1 mm to 0.2 mm from an upper surface of the mother glass substrate 1.

Alignment marks are taken by a pair of cameras, which are not shown, during the time after the mother glass substrate 1 is positioned on the table 31 and before the scribing is started for the mother glass substrate 1. At least two alignment marks are provided on the mother glass substrate 1.

Based on the image of the alignment marks taken, an image processing device (not shown), for example, generates numeric data indicating information regarding the mother glass substrate 1.

Based on the numeric data, the size of the mother glass substrate 1 and the data regarding the patterning, the controller 44 calculates the angle of the mother glass substrate 1 with respect to the scribing direction along the guide rail 36 and the position of the end surface of the mother glass substrate 1 in the Y direction in which the scribing is started by the scribing cutter 21.

### 2-2. Scribing step

Hereinafter, the details of the scribing step (step 502) will be described.

The scribing head 20 is moved to a position in a neighborhood of the outside of the end surface of the mother glass substrate along the line to be scribed which are preset on the mother glass substrate 1.

Next, the scribing head 20 is moved along the line to be scribed and the cutter wheel tip 21 is pressed and rotated on the mother glass substrate 1 so that scribe lines are formed.

The blade edge of the scribing cutter 21 is moved downward to a position 0.1mm-0.2mm from the upper surface of the mother glass substrate 1. Then, the controller 44 outputs an instruction to the third driver 47 to drive the scribing head driving motor 45. In response to the driving the scribing head driving motor 45, the scribing head 20 moves along the guide bar 36. Thus, the scribing step is started for the mother glass substrate 1.

Next, the image processing device mentioned above processes the image data of the alignment marks taken, and sends the processed result to the control section of the substrate cutting apparatus. The scribing head 20 is slid along the guide bar 36 and the sliders 34 and 35 are respectively moved along the guide rails 32 and 33 so that the control section eliminates position displacement from the standard fixed position of the mother glass substrate 1 positioned and fixed on the table 31. As a result, the scribing cutter 21 is pressed and rotated along the straight line to be scribed in the predetermined Y direction. Thus, the scribing method is referred to as scribing by linear interpolation, which is performed by pressing and rotating the scribing cutter 21 along the straight line to be scribed as the guide bar 36 is moved in the X direction and the scribing head 20 is moved in the Y direction.

When the scribing is performed in the X direction along the guide rails 32 and 33, the controller 44 calculates the scribing direction and the position of the end surface of the mother glass substrate in the X direction in which the scribing is started by the scribing cutter 21. The scribing cutter 21 is pressed and rotated along the straight line to be scribed in the predetermined X direction by the linear interpolation mentioned above.

The scribing cutter 21 is held rotatably around the rotary axis 27c in the bearing case 26 via the bearing 28. Thus, the mother glass substrate 1 can be scribed by pressing and rotating the scribing cutter 21 along a predetermined closed curve on the mother glass substrate 1.

Figure 10 shows an example of lines to be scribed set on the mother glass substrate 1, used in the scribing step according to one embodiment of the present invention.

The lines to be scribed are preset on the mother glass substrate 1 so that four substrates can be manufactured from one mother glass substrate 1.

The mother glass substrate 1 has a shape of a rectangle. Two substrates is of the four substrates 1a are arranged in two columns along the longitudinal direction of the mother glass substrate 1. The four substrates 1a are arranged with being appropriately spaced from each other. The four substrates 1a are arranged with being appropriately spaced from two side edges along the longitudinal direction of the mother glass substrate 1 and two side edges along the width direction of the mother glass substrate 1, respectively.

According to the substrate cutting method according to the embodiment of the invention, scribing lines are formed all around the substrate 1a for each of the four substrates 1a one by one in a specific order. Four substrates 1a are cut from the mother glass substrate 1 by breaking each of four substrates 1a in the breaking step, which is performed after the scribing step.

For example, first, the mother glass substrate 1 is scribed all around the substrate 1a in the top left section of the mother glass substrate 1 shown in Figure 10.

In the scribing step according to the embodiment of the invention, scribe lines are formed along a straight line L9 to be scribed along a side edge in parallel to the longitudinal direction of the mother glass substrate 1 for the substrate 1a which is to be scribed. That is, the scribing cutter 21 presses and rotates the surface of the mother glass substrate 1 along the line L9 to be scribed.

In the scribing step according to the embodiment of the invention, the start point at which the scribing cutter 21 starts scribing is a position of inside-cut on the mother glass substrate 1. However, the start point can be a position in a neighborhood outside of the end surface of the mother glass substrate 1 along the line L9 to be scribed (i.e., a position of outside-cut).

As shown in Figures 4A and 4B, a plurality of protrusions j with a predetermined pitch p are provided all around the ridge of the blade edge of the scribing cutter 21 (e.g., cutter wheel tip). Thus, as the scribing cutter 21 presses and rotates the surface of the mother glass substrate 1, a vertical crack extending from the scribe line can occur along the thickness direction of the mother glass substrate 1. The vertical crack can occur approximately in the entire thickness of the mother glass substrate 1.

As the scribe line is formed along the line L9 to be scribed, the guide bar 36 is moved in the X direction and the scribing head 20 is moved in the Y direction. Thus, the scribing cutter 21 is circled around the vertical axis with an angle of 270 degrees so that the scribing cutter 21 forms a scribing line having a track of continuous curve with a radius of approximately 1mm (see corner part A of Figure 10). The line which indicates a curve portion formed as shown in the corner part A of Figure 10 is formed by circling the scribing cutter 21 around the vertical axis with an angle of 270 degrees. The line indicating the curve portion is formed so that it is smoothly connected to one end of the scribe line formed along the line L9 to be scribed and one end of the scribe line formed along the line L10 to be scribed.

In this way, this curve portion is formed along a first boundary line (a curved line of the line to be scribed) defining a first region on the substrate. At least a portion of the first boundary line is a curve. At least a portion of the first boundary line is smoothly connected to another portion of the first boundary line.

While the scribing cutter 21 is moved by circling, a deep vertical crack is not formed in the mother glass substrate 1 because a pressuring force applied to the mother glass substrate 1 by the scribing cutter 21 (e.g., cutter wheel tip) is reduced. In the case where the thickness of the mother glass substrate 1 is 0.7mm, the depth of the vertical crack formed in the mother glass substrate 1 while the scribing cutter 21 is moved by circling is approximately 100µm to 200µm.

As described above, when a cross-scribing is performed by the scribing cutter 21 using a conventional technique, a chipping may occur at a crossing point of the scribe lines formed by scribing in a first direction and the scribe line formed by scribing in a second direction in the mother glass substrate 1.

When the scribe line is formed along the first direction, a vertical crack is formed in the mother glass substrate so as to reach a depth approximately equivalent to the thickness of the plate. When the scribing cutter 21 reaches near the scribe line along the first direction, while a scribe line is formed along the second direction, the mother glass substrate 1 sinks. Therefore, such a chipping occurs when cutter wheel tip moves onto the glass substrate along the scribe line in the first direction at the crossing point of the scribe lines in the first direction and the second direction.

In the scribing step according to the embodiment of the invention, the pressure applied to the mother glass substrate 1 by the scribing cutter 21 when the curve portion is formed is lower than the pressure applied to the mother glass substrate 1 by the scribing cutter 21 when at least one of the scribe line formed along the line L9 to be scribed and the scribe line formed along the line L10 to be scribed. Thus, in the scribing step according to the embodiment of the invention, the pressure due to contact force applied to the mother glass substrate 1 is reduced since the scribing cutter 21 is circled. Thus, when the scribe line is formed along the first direction, a vertical crack reaching a depth approximately equivalent to the thickness of the plate is not formed at the corner part A of the mother glass substrate 1. Thus, when the scribing cutter 21 reaches near the scribe line along the first direction while a scribe line is formed along the second direction, the mother glass substrate 1 does not sink. As a result, occurrence of a chipping at the crossing section in the mother glass substrate 1 can be prevented.

After the direction of the scribing cutter 21 is circled with an angle of 270 degrees, the scribing cutter 21 is moved along the straight line L10 to be scribed along the width direction of the substrate 1a which is orthogonal to the line L9 to be scribed. The scribing cutter 21 is pressed and rotated along the line L10 to be scribed , and a scribe line with a vertical crack extending entirely across the thickness direction.

After that, as in the similar way, the scribing cutter 21 is circled with an angle of 270 degrees in a direction orthogonal to the line L10 to be scribed while a track of continuous curve with a radius of approximately 1mm is formed at a corner part B of the substrate 1a without spacing the scribing cutter 21 from the surface of the mother glass substrate 1, and then scribing cutter 21 is pressed and rotated along the line L11 to be scribed. The scribing cutter 21 (e.g., cutter wheel tip) is pressed and rotated along the line L11 to be scribed, and a scribe line is formed with a vertical crack extending entirely across the thickness direction.

After that, in the similar way, the scribing cutter 21 is circled with an angle of 270 degrees in a direction orthogonal to the line L11 to be scribed while a track of continuous curve with a radius of approximately 1mm is formed at a corner part C, of the substrate 1a without spacing the scribing cutter 21 from the surface of the mother glass substrate 1, and then the scribing cutter 21 is pressed and rotated along the line L12 to be scribed. The scribing cutter 21 (e.g., cutter wheel tip) is pressed and rotated along the line L12 to be scribed, and a scribe line is formed with a vertical crack extending entirely across the thickness direction.

In this way, the lines L9-L12 to be scribed define the region in a shape of rectangle on the mother glass substrate 1. A closed curved line including four straight scribing lines and four curved lines is formed on the circumference of the substrate 1a by performing the scribing step according to the embodiment of the invention.

As for each of the other three of four substrates 1a, a closed curved line including four straight scribing lines is formed in each circumference of the other three of the four substrates 1a by performing the scribing step according to the embodiment of the invention.

After the scribing step according to the embodiment of the invention is performed for each of four substrates 1a, four substrates 1a can be cut from the mother glass substrate 1 by performing the breaking step according to the embodiment of the invention.

In the breaking step according to the embodiment of the invention, each of four substrates 1a can be broken by heating or cooling each region of the four substrates 1a or a region other than regions of the four substrates 1a. Heating a region can be performed by, for example, a heater, or laser beam irradiated from a laser oscillator. Cooling a region can be performed by, for example, spraying a cooling medium (e.g., CO₂, He, N₂ and the like) to the region using a cooling nozzle.

After each of the four substrates 1a is out from the mother glass substrate 1, the four substrates 1a are retrieved out of the mother glass substrate 1 using a carrier including, for example, a vacuum adsorbing means. The remaining portion of the mother glass substrate 1 from which the substrates 1a are retrieved is discarded as an unnecessary portion.

The details of the breaking step will be described later.

By performing the initial setting step, information required for performing the scribing step (for example, information regarding a shape and dimension of the mother glass substrate 1 and information regarding a line to be scribed) is set in the controller 44 prior to the performance of the scribing step. The scribing head driving motor 45 is controlled and the linear motors 37 and 38 are controlled in accordance with the position of the table 31 and the position of the mother glass substrate 1 which is placed on the table 31. As a result, the scribing cutter 21 is moved along the line to be scribed set in the mother glass substrate 1 and a scribe line is formed on the mother glass substrate 1.

In the scribing step according to the embodiment of the invention described with reference to Figure 10, the line L12 to be scribed terminates on the mother glass substrate 1- However, the scribing end position along the line L12 to be scribed can be either a position on the mother glass substrate as shown in Figure 10 or a position near the end surface of the mother glass substrate.

Furthermore, in the scribing step according to the embodiment of the invention described with reference with Figure 10, the lines L9-L12 to be scribed are straight. However, the lines L9 -L12 to be scribed are not limited to a straight line. At least one of the lines L9-L12 to be scribed can have a straight line, a curved line or a combination of the straight line and the curved line.

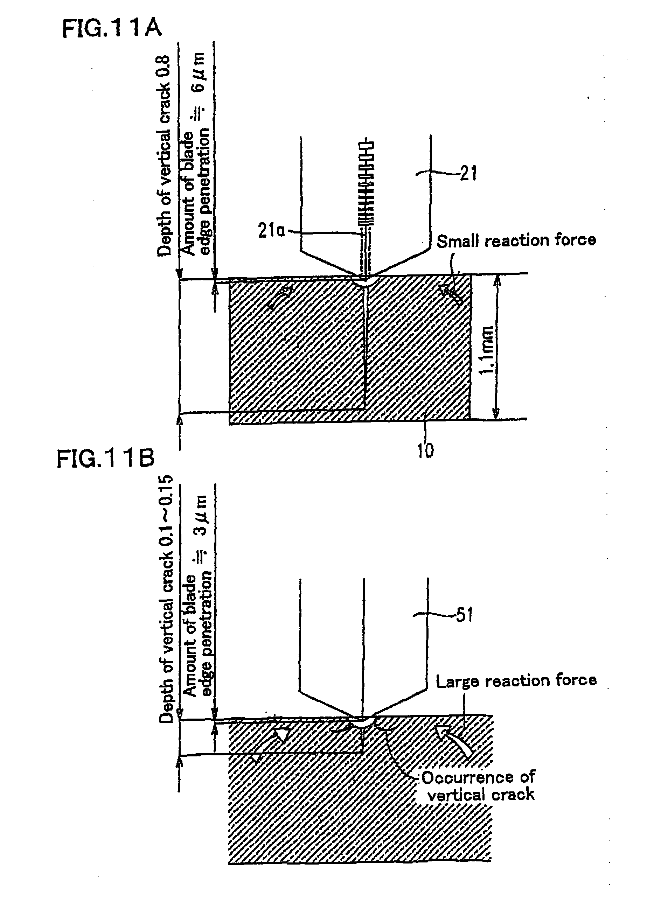

Figure 11A shows a vertical crack which occurs when a scribe line is formed by the scribing cutter 21.

For example, in the case where the scribing cutter 21 is pressed and rotated on a glass substrate 10 with a thickness of 1.1 mm, the blade edge 21b of the scribing cutter 21 penetrates approximately 6µm from the surface of the glass substrate 10. As a result, the reaction force from the glass substrate 10 is small. Thus, a vertical crack with a depth of 0.8mm-1.0mm occurs.

In this way, the plurality of protrusions j formed on the blade edge 21b of the scribing outter 21 give a pinpoint impact on the glass substrate 10. Thus, there is no possibility that a horizontal crack occurs due to the reaction force along the surface of the glass substrate 10 at the time the scribing step is performed. There is no possibility that a chipping and the like occur in the circumference portion of the scribe lines to be formed.

Figure 11B shows a vertical crack and a horizontal crack occurred when a scribe line is formed by a scribing cutter 51.

The structure of a scribing cutter 51 is the same as the structure of the scribing cutter 21 except that a plurality of protrusions j formed on the blade edge 21b of the scribing cutter 21 is not formed on the blade edge of the scribing cutter 51.

For example, in a case where the scribing cutter 51 is rolled on the glass substrate 10 with a thickness of 1. 1mm, the blade edge of the scribing cutter 51 only penetrates 3µm from the surface of the glass substrate 10. As a result, a vertical crack which occurs has only a depth of 0. 1mm- 0.15mm. Moreover, horizontal stress can be generated along the surface of the glass substrate 10. Therefore, a horizontal crack occurs due to a reaction force in the horizontal direction along the surface of the glass substrate 10. Chippings and the like occur on the circumference portion of the scribing line to be formed.

In this way, the scribing line is formed by the scribing cutter 21. Thus, there is no possibility that chippings and the like occur on the surface of the substrate 1a based on the occurrence of a horizontal stress.

Furthermore, in the scribing step according the embodiment of the invention, a pressure due to contact force applied to the mother glass substrate 1 is reduced because the scribing cutter 21 is circled. When the scribe line is formed along the first direction, a vertical crack reaching the depth approximately equivalent to the plate thickness in the corner portion A of the mother glass substrate is not formed. Thus, when the scribing cutter 21 reaches near the scribe line along the first direction while a scribe line is formed along the second direction, the mother glass substrate 1 does not sink. As a result, occurrence of a chipping in the mother glass substrate 1 at the crossing section can be prevented.

Furthermore, when the mother glass substrate 1 is scribed by the scribing cutter 21, the pressing force applied to the mother glass substrate 1 by the scribing cutter 1 can be reduced. Thus, it is possible to limit wear on the scribing cutter 21 and damage to the scribing cutter 21. Therefore, the scribing outter 21 can be stably used for long period of time.

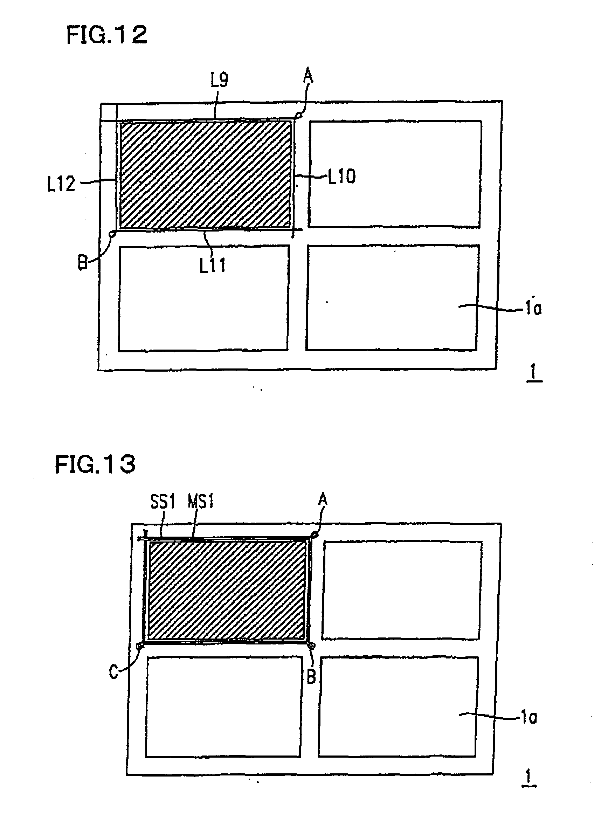

Figure 12 shows another example of lines to be scribed formed on the mother glass substrate 1 used in the scribing step according to one embodiment of the present invention.

In the scribing step according to the embodiment of the present invention described with reference to Figure 12, scribe lines along the lines L9 and L10 to be scribed are formed in the same way as the scribing step according to the embodiment of the present invention described with reference to Figure 10.

In a case where a scribe line is formed along the line L9 to be scribed, the scribe line is formed along the line L9 to be scribed continuously from the position where the scribing cutter 21 is positioned near the outside of the end surface of the mother glass substrate 1.

Chippings on the mother glass substrate 1, which occur when the scribing cutter 21 moves on the surface of the mother glass substrate 1 at the start of forming the scribe line, do not affect the substrate 1a which becomes a product.

The scribing cutter 21 is circled with an angle of 270 degrees in a direction orthogonal to the line L9 to be scribed while a track of continuous curve with a radius of approximately 1mm is formed in a corner part A of the substrate 1a and then the scribing cutter 21 is pressed and rotated along the line L10 to be scribed. The scribing cutter 21 (e.g., cutter wheel tip) is pressed and rotated along the line L10 to be scribed, and a scribe line is formed with a vertical crack extending entirely across the thick direction.

Thereafter; a scribe line along the lines L11 and L12 to be scribed in a direction orthogonal to the line L9 to be scribed is formed in the order of the line L11 to be scribed and the line L12 to be scribed by the scribing cutter 21 after the scribing cutter 21 is spaced from the surface of the mother glass substrate 1. In a case where the scribe line along the lines L11 and L12 to be scribed is formed, chippings on the mother glass substrate 1, which occur when the scribing cutter 21 is moved on the surface of the mother glass substrate 1 at the start of forming the scribe line, do not affect the substrate 1a which becomes a product.

In this way, a closed curved line including four straight scribing lines is formed in the circumference of the substrate 1a by performing the scribing step according to the embodiment of the present invention.

As for each of the other three of four substrates 1a, a closed curved line including four straight scribing lines is formed in each circumference of the other three of the four substrates 1a by performing the scribing step according to the embodiment of the present invention.

After the scribing step according to the embodiment of the present invention is performed for each of four substrates 1a, each of four substrates 1a can be cut from the mother glass substrate 1 by performing the breaking step according to the embodiment of the present invention.

After the four substrates 1a are cut from the mother glass substrate 1, the four substrates 1a are retrieved from the mother glass substrate 1 using a carrier including, for example, a vacuum adsorbing means. The remaining portion of the mother glass substrate from which the four substrates are retrieved is discarded as an unnecessary portion.

In the breaking step according to the embodiment of the present invention, each of four substrates 1a can be broken by heating or cooling each region of the four substrates 1a or a region other than regions of the four substrates 1a. Heating a region can be performed by, for example, a heater, or laser beam irradiated from a laser oscillator. Cooling a region can be performed by, for example, spraying a cooling medium (e.g., CO₂, He, N₂ and the like) on the region using a cooling nozzle.

The details of the breaking step will be described later.

In the scribing step according the embodiment of the present invention described with reference to Figure 12, a pressure due to contact force applied to the mother glass substrate 1 is reduced because the scribing cutter 21 is circled. Thus, when the scribe line is formed along the first direction, a vertical crack which reaches a depth approximately equivalent to the thickness of the plate in the corner portion A of the mother glass substrate is not formed. Thus, when the scribing cutter 21 reaches near the scribe line along the first direction while a scribe line is formed along the second direction, the mother glass substrate 1 does not sink. As a result, occurrence of a chipping in the mother glass substrate 1 at the crossing section can be prevented.

Furthermore, when the mother glass substrate 1 is scribed by the scribing cutter 21, the pressing force applied to the mother glass substrate 1 by the scribing cutter 21 can be reduced. Thus, it is possible to limit wear on the scribing cutter 21 and damage to the scribing cutter 21. Therefore, the scribing cutter 21 can be stably used for long period of time.

Figure 13 shows yet another example of lines to be scribed formed on the mother glass substrate 1 used in the scribing step according to one embodiment of the present invention.

In the scribing step according to the embodiment of the present invention described with reference to Figure 13, first, four scribe lines along the lines L9-L12 to be scribed (hereafter the four scribe lines are referred as the main scribe lines MS1) are formed in the same way as the ones in the scribing step according to the embodiment of the present invention described with reference to Figure 10. After the main scribe lines MS1 are formed, sub-scribe lines SS1 including four straight lines are formed outside the substrate 1a with being spaced from the main scribe lines MS1 by approximately 0. 5mm- 1mm with the main scribe lines. Each of the four straight scribe lines included in the main scribe lines MS1 and each of the four straight scribe lines included in sub-sarlbe lines SS1 are in parallel.

As described with reference to Figure 13, in a case where sub-scribe lines SS1 formed with being spaced from the main scribe lines MS1 by approximately 0.5mm-1mm, a stress is applied in a horizontal direction orthogonal to the direction of forming scribe lines on the surface of the mother glass substrate at the time of forming the sub-scribe lines SS1. A compression force acts on the surface portion of a vertical crack which forms the main scribe lines MS1 already formed. When a compression force acts on the surface portion of a vertical crack which forms the main scribe lines MS1, the reaction force acts on the bottom of the vertical crack in a direction in which the width of the vertical crack extends. Therefore, the vertical crack extends in the thickness direction of the mother glass substrate 1. Furthermore, the vertical crack reaches the back surface of the mother glass substrate.

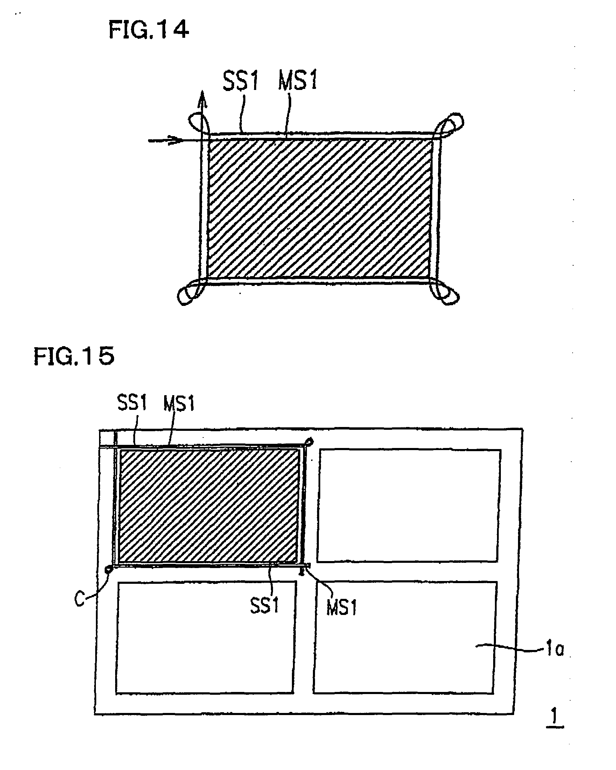

Figure 14 shows yet another example of a line to be scribed formed on a mother glass substrate used in the scribing step according to one embodiment of the present invention.

In the scribing step according to the embodiment of the present invention, the scribing cutter 21 is once spaced from the mother glass substrate 1 between the time of forming the main scribe lines MS1 and the time of forming the sub-scribe lines SS1. However, as shown in Figure 14, the sub-scribe lines SS1 can be formed continuously after the main scribe lines MS1 are formed without spacing the scribing cutter 21 from the mother glass substrate 1.

Figure 15 shows yet another example of lines to be scribed formed on a mother glass substrate used in the scribing step according to one embodiment of the present invention.

Like the scribing step according to the embodiment of the present invention described with reference to Figure 12, after two straight scribe lines having the main scribe lines MS1 are formed along the lines L9 and L10 to be scribed without spacing the scribing cutter 21 from the mother glass substrate 1, the scribing cutter 21 is spaced from the mother glass substrate 1. The two remaining straight scribe lines included in the main scribe lines MS1 are formed along the lines L11 and L12 to be scribed without spacing the scribing cutter 21 from the mother glass substrate 1. The sub-scribe lines SS1 are formed in the similar step as the main scribe lines MS1.

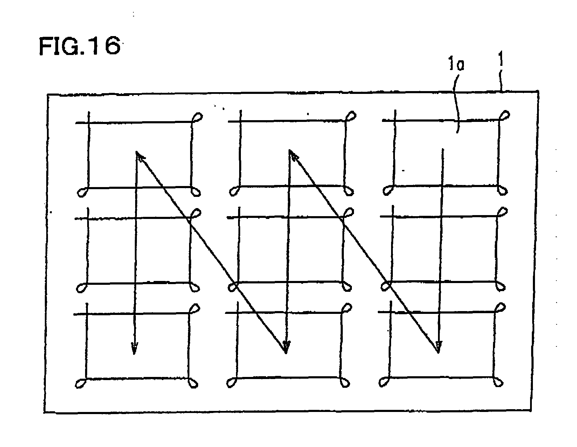

Figure 16 shows nine substrates 1a arranged on the mother glass substrate 1.

For example, in one of the side portions in the longitudinal direction of the mother glass substrate 1, scribe lines are formed on each of three substrates 1a in a specific order so that the three glass substrates 1a are formed along the width direction of the mother glass substrate 1.

Next, in the central portion in the longitudinal direction of the mother glass substrate 1, scribe lines are formed on each of three substrates 1a in a specific order so that the three glass substrates 1a are formed along the width direction of the mother glass substrate 1.

Finally, in the other of side portions in the longitudinal direction of the mother glass substrate 1, scribe lines are formed on each of three substrates 1a in a specific order so that the three glass substrates 1a are formed along the width of the mother glass substrate 1.

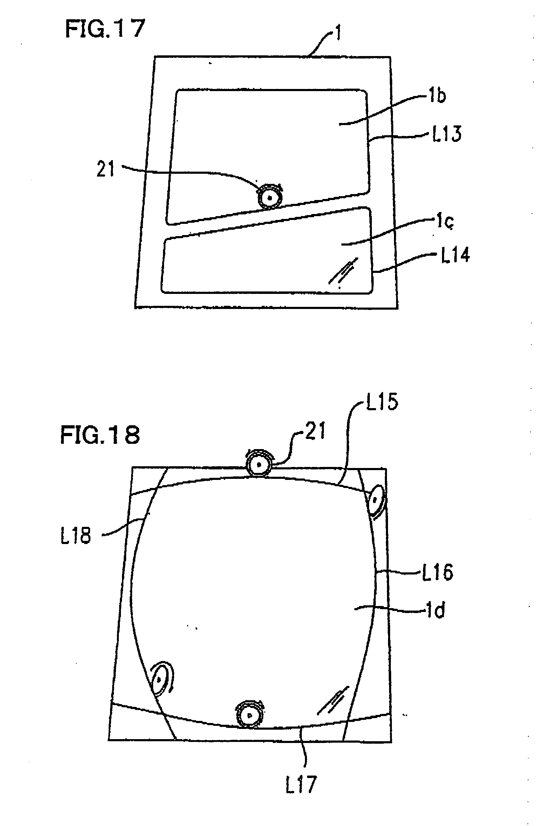

Figure 17 shows yet another example of lines to be scribed formed on the mother glass substrate 1 in the scribing step according to one embodiment of the present invention.

Figure 17 shows lines L13 and L14 to be scribed for cutting the substrates 1b and 1c with an irregular shape from the mother glass substrate 1.

The scribing cutter 21 is pressed and rotated on the mother glass substrate 1 along the lines L13 and L14 to be scribed with the above-mentioned irregular shape without being spaced from the mother glass substrate 1. Accordingly, scribe lines with an irregular shape are formed on the mother glass substrate 1.

The above-mentioned irregular shapes are shapes other than a rectangular shape and include a straight line and/or a curved line.

Figure 18 shows yet another example of lines to be scribed formed on the mother glass substrate 1 in the scribing step according to one embodiment of the present invention.

Figure 18 shows the lines L15-L18 to be scribed for cutting the substrates 1d with an irregular shape from the mother glass substrate 1.

Each of the lines L15-L18 to be scribed is provided to correspond to at least one curve defining a shape of the substrate 1d with an irregular shape.

The lines L15-L18 to be scribed are curved lines which have a predetermined degree of curvature and are provided from one of end surfaces of the substrate to the other of end surfaces of the substrate.

First, the scribing cutter 21 is pressed and rotates on the surface of the mother glass substrate 1 along the line L15 to be scribed to form a scribe line. Thereafter, the scribing cutter 21 is pressed and rotates on the surface of the mother glass substrate along the lines L16-L18 to be scribed to form scribe lines, respectively.

The above-mentioned irregular shapes are shapes other than the shape of a rectangle, and include a straight line and/or a curved line.

### 2-3. Breaking step

Hereinafter, the details of the breaking step according to the embodiment of the present invention will be described.

The breaking step is, for example, performed for the mother glass substrate 1 with the scribe lines formed thereon by the scribing step.

After the scribe lines are formed along the lines L9-L12 to be scribed, steam having a temperature sufficient to cause expansion of the mother glass substrate 1 is sprayed onto the scribe lines formed. Steam is sprayed from the nozzle portion 52d of the steam generating apparatus 52 shown in Figure 7. By spraying steam to the scribe lines, vertical cracks extending from the scribe lines extend in the thickness direction of the mother glass substrate 1.

The steam sprayed onto the vertical cracks having openings on the order of micrometers penetrates into the vertical cracks due to a capillary phenomenon. The penetrated liquid expands (volume expansion), and thus, the vertical cracks are extended toward the back surface of the mother glass substrate 1.

The nozzle unit 53 including a plurality of nozzle portion 52b can be provided on the guide bar 36 and steam can be sprayed onto the surface of the mother glass substrate 1 on which a scribe line is formed (see Figure 8).

The mother glass substrate 1 may be broken along the scribe lines formed on the mother glass substrate by applying a pressure to the mother glass substrate on which the scribe lines are formed from a surface opposite to the surface on which the scribe lines are formed without providing the steam generating apparatus 52.

Furthermore, as a cutting assisting means, the scribing head may include a laser oscillator for heating the scribing lines using a laser beam instead of steam in the scribing head. The scribing head 20 may include a laser oscillator for drying moisture.

In the embodiment of the present invention, an example has been described where the breaking step is performed after the performance of the scribing step. However, the breaking step is not limited to being performed only after the performance of the scribing step. As long as a vertical crack extending from the scribe lines can extend in the thickness direction of the substrate by spraying a heating fluid having a temperature sufficient to expand the substrate on which the scribe lines are formed, the time of starting the scribing step and the breaking step, can be chosen arbitrarily. For example, the breaking step of spraying steam to a scribe line can be performed while a straight line is formed.

The substrate cutting apparatus and the substrate cutting method according to an embodiment of the present invention have been described.

In the embodiments of the present invention, one mother glass substrate 1 is cut. However, the number of divisions the substrate to be cut is not limited to one. The present invention can be applied to the case where the bonded substrate formed by bonding a first substrate and a second substrate is cut. The present invention can be applied to the case where the bonded substrate can be cut into, for example, liquid display panels which is a type of flat display panel, organic EL panels, inorganic EL panels, transmissive projector substrates, reflective projector substrates, or the like.

Figure 19 shows a part of a mother glass substrate cutting apparatus capable of cutting a bonded substrate which is formed by bonding two substrates.

The bonded substrate 200 is formed by bonding an upper brittle material substrate 200A and a lower brittle material substrate 200B. The scribe lines are formed on the bonded substrate 200 by a scribing means 201 and a scribing means 202 scribing from the upper side and the lower side of the bonded substrate 200.

In the embodiment of the present invention, the cutting apparatus and the cutting method for a mother glass substrate have been described. However, the substrates to be cut are not limited to glass substrates. The present invention can be applied to, for example, quartz substrates, sapphire substrates, semiconductor wafers and ceramic substrates.

Further, in the scribing step according to an embodiment of the present invention, in a case where the scribing cutter (for example, cutter wheel tips 21 and 51, a diamond point cutter, a cutter wheel, or any other scribe formation means) is in contact with the mother glass substrate 1, and then the scribe line is formed with the pressure to the mother glass substrate 1 being periodically varied by vibrating the scribing cutter, the breaking step according to the embodiment of the present invention can effectively be performed and the same effect can be obtained, as would be obtained if the scribing cutter 21 were used.

An example has been described where four straight scribe lines are formed on the mother glass substrate to cut the substrate in a rectangular shape. However, straight scribe lines to be formed are not limited to four. In a case where three or more straight scribe lines are formed to retrieve a substrate with a polygonal shape, the present invention can be applied. For example, three or more lines to be scribed define a region with a polygonal shape on the mother glass substrate 1. A closed curved line including three or more straight scribe lines and two or more curved lines are formed on the circumference of the substrate by performing the scribing step according to the embodiment of the present invention.

Each of three or more scribe lines is not limited to a straight line. At least one of the three or more scribe lines can have a straight line, a curved line or a combination of a straight line and a curved line.

The present invention has been described above with reference to the preferred embodiments of the present invention. However, the present invention should not be construed as being limited to such embodiments. It should be recognized that the scope of the present invention is only construed by the claims. It should be recognized that those skilled in the art can implement the equivalent scope from the descriptions of the specific preferable embodiments, based on the descriptions of the present invention and common technical knowledge. It is also recognized that the patents, patent applications and documents referred herein are hereby incorporated by reference as if their entirety are described.

### INDUSTRIAL APPLICABILITY

According to the substrate cutting apparatus according to the present invention, by spraying a heated fluid with a temperature sufficient to expand the substrate on which the scribe lines are formed, a vertical crack extending from the scribe lines can extend in the thickness direction of the substrate.

Thus, the vertical crack can extend in the thickness direction of the substrate without mechanically applying a bending moment along the scribe lines.

As a result, without generating chippings in the substrate which compete with each other, a substrate is readily broken along the scribe lines to be cut.

## Claims

1. A substrate cutting apparatus, comprising:
a scribe line forming means for forming a scribe line on a substrate, and
a breaking means for breaking the substrate along the scribe line,
wherein the breaking means includes means for spraying a heated fluid having a temperature sufficient to cause expansion of the substrate onto the scribe line formed on the substrate so as to further extend a vertical crack extending from the scribe line in the thickness direction of the substrate.

2. A substrate cutting apparatus according to claim 1, wherein the scribe line includes at least a first line portion and a second line portion, the first line portion and the second line portion crossing each other and each being a straight line, a curved line or a combination thereof, and
the scribe line forming means forms the first line portion and the second line portion while the scribe line forming means is spaced from the substrate.

3. A substrate cutting apparatus according to claim 1, wherein the scribe line includes a first line portion and a second line portion, the first line portion and the second line portion crossing each other and each being a straight line, a curved line or a combination thereof, and
the scribe line forming means forms the first line portion and the second line portion without the scribe line forming means being spaced away from the substrate.

4. A substrate cutting apparatus according to claim 3, wherein the scribe line further includes a curved line portion smoothly connected to an end of the first line portion and an end of the second line portions,
the end of the first line portion is connected to the end of the second line portion, the curved line portion is formed along a boundary line defining a predetermined region on the substrate, at least a portion of the boundary line is a curved line and the at least a portion of the boundary line is smoothly connected to another portion of the boundary line, and
the scribe line forming means forms the first line portion, the curved line portion and the second line portion.

5. A substrate cutting apparatus according to claim 3, wherein the scribe line further includes a third line portion, a first curved line portion and a second curved line portion, the first line portion, the second line portion and the third line portion crossing one another, and each being a straight line, a curved line or a combination thereof,
the first line portion, the second line portion and the third line portion define at least a portion of a third region having a polygonal shape on the substrate,
an end of the first line portion is connected to an end of the second line portion,
another end of the second line portion is connected to an end of the third line portion,
the first curved line portion is a curved line portion which is smoothly connected to the end of the first line portion and the end of the second line portion,
the first curved line portion is formed along a first boundary line defining a first region on the substrate, at least a portion of the first boundary line is a curved line and the at least portion of the first boundary line is smoothly connected to another portion of the first boundary line,
the second curved line portion is a curved line portion which is smoothly connected to the other end of the second line portion and the end of the third line portion,
the second curved line portion is formed along a second boundary line defining a second region on the substrate, at least portion of the second boundary line is a curved line and the at least a portion of the second boundary line is smoothly connected to another portion of the second boundary line,
the first region, the second region and the third region are different regions which do not overlap one another, and
the scribe line forming means forms the first line portion, the first curved line portion, the second line portion, the second curved line portion and the third line portion.

6. A substrate cutting apparatus according to claim 3, wherein the scribe line further includes a third line portion, a fourth line portion, a first curved line portion, a second curved line portion and a third curved line portion, the first curve portion, the second line portion, the third line portion and the fourth line portion crossing one another and each being a straight line, a curved line or a combination thereof,
the first line portion, the second line portion, the third line portion and the fourth line portion define a fifth region having a rectangular shape on the substrate,
an end of the first line portion is connected to an end of the second line portion,
another end of the second line portion is connected to an end of the third line portion,
another end of the third line portion is connected to an end of the fourth line portion,
another end of the fourth line portion is connected to another end of the first line portion,
the first curved line portion is a curved line portion which is smoothly connected to the end of the first line portion and the end of the second line portion,
the first curved line portion is formed along a first boundary line defining a first region on the substrate, at least a portion of the first boundary line is a curved line and the at least a portion of the first boundary line is smoothly connected to another portion of the first boundary line,
the second curved line portion is a curved line portion which is smoothly connected to the other end of the second line portion and the end of the third line portion,
the second curved line portion is formed along a second boundary line defining a second region on the substrate, at least portion of the second boundary line is a curved line and the at least a portion of the second boundary line is smoothly connected to another portion of the second boundary line,
the third curved line portion is a curved line portion which is smoothly connected to the other end of the third line portion and the end of the fourth line portion,
the third curved line portion is formed along a third boundary line defining a third region on the substrate, at least a portion of the third boundary line is a curved line, and the at least a portion of the third boundary line is smoothly connected to another portion of the third boundary line,
the first region, the second region, the third region and the fifth region are different regions on the substrate which do not cross overlap one another, and
the scribe line forming means forms the first line portion, the first curved line portion, the second line portion, the second curved line portion, the third line portion, the third curved line portion and the fourth line portion.

7. A substrate cutting apparatus according to claim 1, wherein the scribe line forming means is a scribe cutter having a shape of a disc, and a blade edge which rolls and contacts a surface of the substrate is formed on an external circumference surface of the scribing cutter.

8. A substrate cutting apparatus according to claim 7, wherein a plurality of protrusions with a predetermined pitch is formed on the blade edge.

9. A substrate cutting apparatus according to claim 1, wherein further comprising a heating means for heating the scribe line.

10. A substrate cutting apparatus according to claim 4, Wherein a pressure applied to the substrate by the scribe line forming means when forming the curved portion is lower than a pressure applied to the substrate by the scribe line forming means when forming at least one of the first line portion and the second line portion.

11. A substrate cutting apparatus according to claim 1, further comprising a rotating driving means for rotating the scribe line forming means around a vertical axis.

12. A substrate cutting method, comprising:
a scribe line forming step of forming a scribe line on a substrate, and
a breaking step of breaking the substrate along the scribe line,
wherein the breaking step includes a step of spraying a heated fluid having a temperature sufficient to cause expansion of the substrate onto the scribe line formed on the substrate so as to further extend a vertical crack extending from the scribe line in the thickness direction of the substrate.

13. A substrate cutting method according to claim 12, wherein the scribe line includes at least a first line portion and a second line portion, the first line portion and the second line portion crossing each other and each being a straight line, a curved line or a combination thereof,
the scribing line forming step is performed by means for forming the scribe line on the substrate, and
the scribe line forming step includes the steps of:
forming the first line portion, and
forming the second line portion while the means being spaced from the substrate after the first line portion is formed.

14. A substrate cutting method according to claim 12, wherein the scribe line includes a first line portion and a second line portion, the first line portion and the second line portion crossing each other and each being a straight line, a curved line or a combination thereof,
the scribing line forming step is performed by means for forming the scribe line on the substrate,
the scribe line forming step includes the steps of:
forming the first line portion, and
forming the second line portion Without the means being spaced from the substrate after the first line portion is formed.

15. A substrate cutting method according to claim 14, wherein the scribe line further includes a curved line portion smoothly connected to and end of the first line portion and an end of second line portion,
the end of the first line portion is connected to the end of the second line portion, the curved line portion is formed along a boundary line defining a predetermined region on the substrate, at least a portion of the boundary line is a curved line and the at least a portion of the boundary line is smoothly connected to another end of the boundary line,
the scribe line forming step includes steps of:
forming the first line portion,
forming the curved line portion, and
forming the second line portion.

16. A substrate cutting method according to claim 14, wherein the scribe line further includes a third line portion, a first curved line portion and a second curved line portion, the first line portion, the second line portion and the third line portion crossing one another, and each being a straight line, a curved line or a combination thereof,
the first line portion, the second line portion and the third line portion define at least a portion of a third region having a polygonal shape on the substrate,
an end of the first line portion is connected to an end of the second line portion,
another end of the second line portion is connected to an end of the third line portion,
the first curved line portion is a curved line portion which is smoothly connected to the end of the first line portion and the end of the second line portion,
the first curved line portion is formed along a first boundary line defining a first region on the substrate, at least a portion of the first boundary line is a curved line and the at least a portion of the first boundary line is smoothly connected to another end of the first boundary line,
the second curved line portion is a curved line portion which is smoothly connected to another end of the second line portion and an end of the third line portion,
the second curved line portion is formed along a second boundary line defining a second region on the substrate, at least a portion of the second boundary line is a curved line and the at least a portion of the second boundary line is smoothly connected to another portion of the second boundary line,
the first region, the second region and the third region are different regions which do not overlap one another,
the scribe line forming step includes steps of:
forming the first line portion,
forming the first curved line portion,
forming the second line portion,
forming the second curved line portion, and
forming the third line portion.

17. A substrate cutting method according to claim 14, wherein the scribe line further includes a third line portion, a fourth line portion, a first curved line portion, a second curved line portion and a third curved line portion, the first line portion, the second line portion, the third line portion and the fourth line portion crossing one another and each being a straight line, a curved line or a combination thereof,
the first line portion the second line portion, the third line portion and the fourth line portion define a fifth region having a rectangular shape on the substrate,
an end of the first line portion is connected to an end of the second line portion,
another end of the second line portion is connected to an end of the third line portion,
another end of the third line portion is connected to an end of the fourth line portion,
another end of the fourth line portion is connected to another end of the first line portion,
the first curved line portion is a curved line portion which is smoothly connected to the end of the first line portion and the end of the second line portion,
the first curved line portion is formed along a first boundary line defining a first region on the substrate, at least a portion of the first boundary line is a curved line and the at least a portion of the first boundary line is smoothly connected to another portion of the first boundary line,
the second curved line portion is a curved line portion which is smoothly connected to the other end of the second line portion and the end of the third line portion,
the second curved line portion is formed along a second boundary line defining a second region on the substrate, at least a portion of the second boundary line is a curved line and the at least a portion of the second boundary line is smoothly connected to another portion of the second boundary line,
the third curved line portion is a curved line portion which is smoothly connected to another end of the third line portion and an end of the fourth line portion,
the third curved line portion is formed along a third boundary line defining a third region on the substrate, at least portion of the third boundary line is a curved line and the at least a portion of the third boundary line is smoothly connected to another portion of the third boundary line,
the first region, the second region, the third region and the fifth region are different regions on the substrate which do not overlap with one another,
the scribe line forming step includes steps of:
forming the first line portion,
forming the first curved line portion,
forming the second line portion,
forming the second curved line portion,
forming the third line portion,
forming the third curved line portion, and
forming the fourth line portion.

18. A substrate cutting method according to claim 12, further comprising a heating step of heating the scribe line.

## Amended claims

### Amended claims under Art. 19.1 PCT

**1.** Amended) A substrate cutting apparatus for cutting a plurality of unit substrates from a mother substrate, comprising:
a scribe line forming means for forming a scribe line on the mother substrate, and
a breaking means for breaking the mother substrate along the scribe line,
wherein the breaking means includes means for spraying steam onto the scribe line formed on the mother substrate so that the steam penetrates into a vertical crack extending from the scribe line, and the penetrated steam is cubically expanded so as to further extend the vertical crack in the thickness direction of the mother substrate without applying any bending moment to the mother substrate.

**2.** (Amended) A substrate cutting apparatus according to claim 1, wherein the scribe line includes at least a first line portion and a second line portion, the first line portion and the second line portion crossing each other and each being a straight line, a curved line or a combination thereof, and
the scribe line forming means forms the first line portion and the second line portion while the scribe line forming means is spaced from the mother substrate.

**3.** (Amended) A substrate cutting apparatus according to claim 1, wherein the scribe line includes a first line portion and a second line portion, the first line portion and the second line portion crossing each other and each being a straight line, a curved line or a combination thereof, and
the scribe line forming means forms the first line portion and the second line portion without the scribe line forming means being spaced away from the mother substrate.

**4.** (Amended) A substrate cutting apparatus according to claim 3, wherein the scribe line further includes a curved line portion smoothly connected to an end of the first line portion and an end of the second line portions,
the end of the first line portion is connected to the end of the second line portion, and
the scribe line forming means forms the first line portion, the curved line portion and the second line portion.

**5.** (Amended) A substrate cutting apparatus according to claim 3, wherein the scribe line further includes a third line portion, a first curved line portion and a second curved line portion, the first line portion, the second line portion and the third line portion crossing one another, and each being a straight line, a curved line or a combination thereof,
the first line portion, the second line portion and the third line portion define at least a portion of a region having a polygonal shape on the mother substrate,
an end of the first line portion is connected to an end of the second line portion,
another end of the second line portion is connected to an end of the third line portion,
the first curved line portion is a curved line portion which is smoothly connected to the end of the first line portion and the end of the second line portion,
the second curved line portion is a curved line portion which is smoothly connected to the other end of the second line portion and the end of the third line portion, and
the scribe line forming means forms the first line portion, the first curved line portion, the second line portion, the second curved line portion and the third line portion.

**6.** (Amended) A substrate cutting apparatus according to claim 3, wherein the scribe line further includes a third line portion, a fourth line portion, a first curved line portion, a second curved line portion and a third curved line portion, the first curve portion, the second line portion, the third line portion and the fourth line portion crossing one another and each being a straight line, a curved line or a combination thereof,
the first line portion, the second line portion, the third line portion and the fourth line portion define a region having a rectangular shape on the mother substrate,
an end of the first line portion is connected to an end of the second line portion,
another end of the second line portion is connected to an end of the third line portion,
another end of the third line portion is connected to an end of the fourth line portion,
another end of the fourth line portion is connected to another end of the first line portion,
the first curved line portion is a curved line portion which is smoothly connected to the end of the first line portion and the end of the second line portion,
the second curved line portion is a curved line portion which is smoothly connected to the other end of the second line portion and the end of the third line portion,
the third curved line portion is a curved line portion which is smoothly connected to the other end of the third line portion and the end of the fourth line portion, and
the scribe line forming means forms the first line portion, the first curved line portion, the second line portion, the second curved line portion, the third line portion, the third curved line portion and the fourth line portion.

**7.** (Amended) A substrate cutting apparatus according to claim 1, wherein the scribe line forming means is a scribe cutter having a shape of a disc, and a blade edge which rolls and contacts a surface of the mother substrate is formed on an external circumference surface of the scribing cutter.

**8.** Unchanged) A substrate cutting apparatus according to claim 7, wherein a plurality of protrusions with a predetermined pitch is formed on the blade edge.

**9.** Unchanged) A substrate cutting apparatus according to claim 1, wherein further comprising a heating means for heating the scribe line.

**10.** (Amended) A substrate cutting apparatus according to claim 4, wherein a pressure applied to the mother substrate by the scribe line forming means when forming the curved portion is lower than a pressure applied to the mother substrate by the scribe line forming means when forming at least one of the first line portion and the second line portion.

**11.** (Unchanged) A substrate cutting apparatus according to claim 1, further comprising a rotating driving means for rotating the scribe line forming means around a vertical axis.

**12.** (Amended) A substrate cutting method for cutting a plurality of unit substrates from a mother substrate, comprising:
a scribe line forming step of forming a scribe line on the mother substrate, and
a breaking step of breaking the mother substrate along the scribe line,
wherein the breaking step includes a step of spraying steam onto the scribe line formed on the mother substrate so that the steam penetrates into a vertical crack extending from the scribe line, and the penetrated steam is cubically expanded so as to further extend the vertical crack in the thickness direction of the mother substrate without applying any bending moment to the mother substrate.

**13.** (Amended) A substrate cutting method according to claim 12, wherein the scribe line includes at least a first line portion and a second line portion, the first line portion and the second line portion crossing each other and each being a straight line, a curved line or a combination thereof,
the scribing line forming step is performed by means for forming the scribe line on the mother substrate, and
the scribe line forming step includes the steps of:
forming the first line portion, and
forming the second line portion while the means being spaced from the mother substrate after the first line portion is formed.

**14.** (Amended) A substrate cutting method according to claim 12, wherein the scribe line includes a first line portion and a second line portion, the first line portion and the second line portion crossing each other and each being a straight line, a curved line or a combination thereof,
the scribing line forming step is performed by means for forming the scribe line on the mother substrate,
the scribe line forming step includes the steps of:
forming the first line portion, and
forming the second line portion without the means being spaced from the mother substrate after the first line portion is formed.

**15.** (Amended) A substrate cutting method according to claim 14, wherein the scribe line further includes a curved line portion smoothly connected to and end of the first line portion and an end of second line portion,
the end of the first line portion is connected to the end of the second line portion,
the scribe line forming step includes steps of:
forming the first line portion,
forming the curved line portion, and
forming the second line portion.

**16.** (Amended) A substrate cutting method according to claim 14, wherein the scribe line further includes a third line portion, a first curved line portion and a second curved line portion, the first line portion, the second line portion and the third line portion crossing one another, and each being a straight line, a curved line or a combination thereof,
the first line portion, the second line portion and the third line portion define at least a portion of a region having a polygonal shape on the mother substrate,
an end of the first line portion is connected to an end of the second line portion,
another end of the second line portion is connected to an end of the third line portion,
the first curved line portion is a curved line portion which is smoothly connected to the end of the first line portion and the end of the second line portion,
the second curved line portion is a curved line portion which is smoothly connected to another end of the second line portion and an end of the third line portion,
the scribe line forming step includes steps of:
forming the first line portion,
forming the first curved line portion,
forming the second line portion,
forming the second curved line portion, and
forming the third line portion.

**17.** (Amended) A substrate cutting method according to claim 14, wherein the scribe line further includes a third line portion, a fourth line portion, a first curved line portion, a second curved line portion and a third curved line portion, the first line portion, the second line portion, the third line portion and the fourth line portion crossing one another and each being a straight line, a curved line or a combination thereof,
the first line portion, the second line portion, the third line portion and the fourth line portion define a region having a rectangular shape on the mother substrate,
an end of the first line portion is connected to an end of the second line portion,
another end of the second line portion is connected to an end of the third line portion,
another end of the third line portion is connected to an end of the fourth line portion,
another end of the fourth line portion is connected to another end of the first line portion,
the first curved line portion is a curved line portion which is smoothly connected to the end of the first line portion and the end of the second line portion,
the second curved line portion is a curved line portion which is smoothly connected to the other end of the second line portion and the end of the third line portion,
the third curved line portion is a curved line portion which is smoothly connected to another end of the third line portion and an end of the fourth line portion,
the scribe line forming step includes steps of:
forming the first line portion,
forming the first curved line portion,
forming the second line portion,
forming the second curved line portion,
forming the third line portion,
forming the third curved line portion, and
forming the fourth line portion.

**18.** (Unchanged) A substrate cutting method according to claim 12, further comprising a heating step of heating the scribe line.

**19.** Added) A substrate cutting method according to claim 15, wherein a pressure applied to the mother substrate by the means when forming the curved portion is lower than a pressure applied to the mother substrate by the means when forming at least one of the first line portion and the second line portion.
